# EUROPÄISCHE PATENTSCHRIFT

(11) **EP 0 614 710 B1**
(45) Veröffentlichungstag und Bekanntmachung des Hinweises auf die Patenterteilung: **02.12.1998**
(21) Anmeldenummer: 94200260.1
(22) Anmeldetag: 01.02.1994
(51) Int. Cl.: B09B 3/00, A62D 3/00, C02F 11/08

(54) **Verfahren zur thermischen Abtrennung von organischen und/oder anorganischen Stoffen aus kontaminiertem Material**
Method of thermally separating organic and/or inorganic substances from a contaminated material
Procédé pour la séparation thermique de substances organiques et/ou inorganiques d'un matière contaminée

(30) Priorität: 10.02.1993 DE 4303722
(43) Veröffentlichungstag der Anmeldung: 14.09.1994
(73) Patentinhaber: EBARA Germany GmbH, 63452 Hanau am Main (DE)
(72) Erfinder: Bandel, Gebhard, Dr., D-63477 Maintal (DE); Becker, Stephan, Dr., D-35444 Biebertal-Fellingshausen (DE); Hankel, Dirk, Dr., D-63165 Lämmerspiel-Mülheim (DE); Weilandt, Erhard, Dr., D-61381 Friedrichsdorf (DE); Renner, Johann, D-93149 Nittenau (DE); Samant, Gurudas Dr., D-35112 Fronhausen (DE)
(74) Vertreter: Zapfe, Hans, Dipl.-Ing.

(56) Entgegenhaltungen:
- EP-A- 0 245 655
- EP-A- 0 252 521
- EP-A- 0 439 738
- EP-A- 0 512 315
- DE-A- 3 937 952
- DE-A- 4 030 416
- US-A- 5 005 495
- NTIS TECH NOTES, Dezember 1990, SPRINGFIELD, VA US Seite 1088 G. VOECKS 'Catalytic destruction of toxic organic compounds'
- WASSER, LUFT UND BODEN, Bd.33, Nr.7/8, Juli 1989, MAINZ DE Seiten 62 - 63 M. DÖPPERT 'Zweistufiges nassmechanisches Verfahren zur Bodensanierung'

## Beschreibung

Die vorliegende Erfindung betrifft ein Verfahren zur thermischen Abtrennung von organischen und/oder anorganischen Stoffen sowie von Wasser aus kontaminierten Böden, Sanden, Schlämmen, Feststoffaggregaten und festen Rückständen.

Aus EP 0 245 655 B1 ist ein Verfahren zur thermischen Abtrennung von flüchtigen, oft heterogen zusammengesetzten Inhaltsstoffen organischer oder anorganischer Natur zusammen mit dem Wasseranteil aus verunreinigten Böden, Sanden, Schlämmen sowie vergleichbaren Feststoffaggregaten und Rückständen bekannt. Bei diesem Verfahren erfolgt nach thermischer Behandlung mit Heißgasen oder Heißdampf eine Kondensation der entstehenden wasserdampf- und schadstoffhaltigen Behandlungsgase. Die flüssige Phase wird abgezogen und naßchemisch oder physikalisch von den Schadstoffen befreit. Restliche Gase werden gegebenenfalls thermisch nachbehandelt oder durch Absorption von den Restschadstoffen befreit. Dieses Verfahren weist den Nachteil auf, daß die Schadstoffe durch die Behandlungsgase in das Kondensat gelangen und aus dem Kondensat durch nachfolgende Abwasserreinigungsverfahren entfernt werden müssen.

Aus DE 39 37 952 A1 ist ein Verfahren zur Reinigung von kontaminierten Böden bekannt. Die Böden werden mit Wasserdampf behandelt und der austretende Dampf wird kondensiert. Dabei wird eine Schicht des Bodens in einem Druckgehäuse auf eine gasdurchlässige Unterlage aufgebracht. In das Druckgehäuse wird Wasserdampf mit einer Temperatur von 100 bis 190°C und einem Druck von 1 bis 12 bar eingeleitet und durch die Schicht geleitet. Der aus der Schicht austretende Dampf wird aus dem Druckgehäuse abgeleitet und kondensiert. Das Kondensat wird einer Reinigung zugeführt und der Feststoff als gereinigter Boden abgeführt. Nach dem Entwässern oder Aufheizen der Schicht kann Naßdampf mit oxidierenden Stoffen durch die Schicht geleitet werden. Als oxidierender Stoff kommt in erster Linie Luft in Frage, jedoch kann auch z.B. sauerstoffangereicherte Luft und/oder H₂O₂ verwendet werden. Ein Teil des austretenden Dampfes kann zur Vorwärmung der wäßrigen Suspension des kontaminierten Bodens vor dessen Aufgabe zurückgeführt werden. Die aus kontaminierten Böden gebildete Schicht befindet sich im Verhältnis zu der Unterlage in Ruhelage. Das kontaminierte Material wird daher nicht bewegt.

Aus EP 0 252 521 B1 ist ein Verfahren zum Abbau von polyhalogenierten Cykloalkylverbindungen mit 4 bis 8 Kohlenstoffatomen und polyhalogenierten Aromaten mit mindestens 5 Kohlenstoffatomen durch Erhitzen in Anwesenheit eines Katalysators bekannt. Bei diesem Verfahren werden die in einem mit polyhalogenierten Verbindungen kontaminierten festen Substrat vorhandenen flüchtigen Bestandteile oder ein mit den polyhalogenierten Verbindungen kontaminiertes flüssiges Substrat oder die polyhalogenierten Verbindungen selbst durch Erhitzen oder Verbrennen in den gasförmigen Zustand überführt, und die entstandenen Gase oder ein mit den polyhalogenierten Verbindungen kontaminiertes gasförmiges Substrat werden in Gegenwart von Sauerstoff und Wasser in innigen Kontakt mit dem Katalysator erhitzt. Als Katalysator wird ein Metalloxid verwendet. Es wird in Gegenwart von Sauerstoff und Wasser gearbeitet, damit einmal die Katalysatoren überwiegend in Oxidform erhalten bleiben und zum anderen, damit bei der Zerstörung der polyhalogenierten Verbindunge HCl und nicht Chlor gebildet wird.

Die DE-A-40 30 416 beschreibt ein Verfahren, bei dem in einer ersten Behandlungsstufe ein Teil der Gase direkt und ein weiterer Teil der Gase erst nach Durchströmen eines Zyklons und eines Verdichters über einen Überhitzer zurückgeführt werden. Der restliche Teil der Gase wird über den Zyklon, einen Wärmetauscher, einen Entgasungsbehälter und eine Aufbereitungsstufe an die zweite Behandlungsstufe weitergeleitet, in der die Gase über ein Zyklon und eine Aufbereitungsstufe nach ihrer vollständigen Reinigung zurückgeführt werden.

Die Aufgabe der vorliegenden Erfindung liegt darin, ein umweltschonendes und energiesparendes Verfahren bereitzustellen, bei dem organische und/oder anorganische flüchtige Inhaltsstoffe aus kontaminierten Böden, Sanden, Schlämmen und vergleichbaren Feststoffaggregaten sowie festen Rückständen thermisch zerstört und in gasförmige Stoffe überführt werden, die keine Umweltbelastung darstellen.

Die Aufgabe wird erfindungsgemäß dadurch gelöst, daß
a) das kontaminierte Material nach einer Vorbehandlung in einem direkt oder indirekt beheizten Ofen, der als Drehrohrofen, Wirbelschichtofen oder Schwebebettreaktor ausgebildet ist, erhitzt wird und während des Erhitzens mit zurückgeführten Heißgasen oder Heißdampf und mit Oxidationsmitteln behandelt wird,
b) die austretenden wasserdampfhaltigen Behandlungsgase entstaubt werden und 80 bis 90 Vol.-% der wasserdampfhaltigen Behandlungsgase unter Ausschluß einer Kondensation als Schleppgas in den Ofen zurückgeführt werden,
c) der restliche Teil der wasserdampfhaltigen Behandlungsgase einer Kondensation unterworfen wird und die dabei gebildete flüssige Phase abgezogen und naßchemisch oder physikalisch von Schadstoffen befreit wird.

Das Verfahren der vorliegenden Erfindung weist gegenüber den bekannten Verfahren den Vorteil auf, daß durch die Verwendung eines Drehrohrofens, Wirbelschichtofens oder Schwebebettreaktors das kontaminierte Material bewegt wird und daß dadurch erheblich größere Durchsätze erreicht werden. Ein weiterer Vorteil liegt darin, daß 80 bis 90 Vol.-% der heißen wasserdampfhaltigen Behandlungsgase in den Ofen zurückgeführt werden. Hierdurch wird die Kondensationsarbeit erheblich vermindert und der Frischwasserbedarf wird durch die Nutzung des Wassergehaltes des kontaminierten Materials reduziert.

Als geeigneter Ofen für das Erhitzen wird ein Drehrohrofen, Wirbelschichtofen oder ein Schwebebettreaktor verwendet. Erfindungsgemäß kann auch ein Reaktor verwendet werden, der aus einer länglichen, rechteckigen Kammer besteht, die oberhalb des Kammerbodens einen Siebboden über den gesamten Querschnitt eingespannt aufweist. Das Material fällt an einem Ende der Kammer über eine Aufgabevorrichtung auf den Siebboden und wird von einem Kettenkratzförderer über den Siebboden zum anderen Ende bewegt und dort ausgetragen. Die Zugabe der Heißgase und des Heißdampfes erfolgt unterhalb des Siebbodens. Die Heißgase oder der Heißdampf und die Oxidationsmittel durchströmen die bewegte fluidisierte Materialschicht von unten nach oben. Das kontaminierte Material wird auf eine Temperatur von 120 bis 700°C aufgeheizt. Bei direkt beheiztem Ofen müssen die Heißgase oder der Heißdampf (Schleppgas) vor der Einleitung in den Ofen auf die für die Reaktion erforderliche Temperatur aufgeheizt werden. Bei indirekt beheiztem Ofen müssen die Heißgase oder der Heißdampf (Schleppgas) oberhalb der Temperatur des Taupunktes gehalten werden, gegebenenfalls muß das Schleppgas vor Einleitung in den Ofen auf eine Temperatur oberhalb des Taupunkts aufgeheizt werden.

Der Ofen kann, je nach der Art der Verunreinigung in einem bestimmten Temperaturbereich betrieben werden, z.B., wenn ein Gemisch von polyaromatischen Kohlenwasserstoffen und Mineralölen sowie organischen und anorganischen Cyanidverbindungen vorliegt, kann der Ofen in einem Temperaturbereich von 250 bis 500°C betrieben werden. Sind die Materialien nur mit polychlorierten Alkanen kontaminiert, z.B. mit Chlorparaffinen, kann der Ofen im Temperaturbereich von 150 bis 250°C betrieben werden. Sind die Materialien mit polychlorierten Biphenylen kontaminiert, kann der Ofen in einem Temperaturbereich von 120 bis 200°C betrieben werden. Somit besteht die Möglichkeit, die Ofentemperatur in einem bestimmten Bereich abhängig von den Schadstoffen zu steuern. Die Oxidationsmittel werden in überstöchiometrischen Mengen, bezogen auf die jeweilige Menge der Schadstoffe, zugegeben. Die wasserdampfhaltigen Gase, die aus dem Ofen austreten, werden in einer Entstaubungsanlage entstaubt. Die Entstaubungsanlage besteht erfindungsgemäß aus einem Kerzenfilter, Sackfilter, Schlauchfilter oder Elektrofilter. Die Menge des wasserdampfhaltigen Behandlungsgases, die in den Ofen zurückgeführt wird, beträgt 80 bis 90 % der nach der Oxidation am Ofenausgang vorhandenen Gesamtmenge an wasserdampfhaltigem Behandlungsgas. Die Menge an einzuleitendem Wasserdampf wird bestimmt durch die zuvor gemessene Menge an Wasser, die im kontaminierten Material vorhanden ist. Durch die Anwesenheit des Wasserdampfes ist sichergestellt, daß erfindungsgemäß die Vorteile einer Wasserdampfdestillation genutzt werden.

Der restliche Teil des wasserdampfhaltigen Behandlungsgases wird einer Kondensation unterworfen. Die Menge des restlichen Teils des wasserdampfhaltigen Behandlungsgases beträgt zwischen 10 und 20%.

Durch die Rückführung des größten Teiles des wasserdampfhaltigen Behandlungsgases wird die Kondensatmenge stark reduziert und entspricht in etwa dem Feuchtigkeitsgehalt des eingetragenen kontaminierten Materials. Aus der Kreislaufführung des Behandlungsgases ergibt sich eine erhebliche Energieersparnis, da nur 10 bis 20% des Behandlungsgases abgekühlt werden müssen. Das aus der Stufe der Kondensation kommende Gas ist wasserdampfgesättigt und wird anschließend über einen Kamin abgegeben. Das Kondensat wird in an sich bekannter Weise naßchemisch oder physikalisch gereinigt, und das gereinigte Abwasser wird einem Vorfluter zugeführt. Es besteht die Möglichkeit, vor dem Vorfluter einen Teilstrom an Wasser abzuzweigen und in die Kondensationsstufe als Kühlmittel zurückzuführen. Eine Frischdampfzugabe dient dem Anfahren des Prozesses bis zum Erreichen eines stabilen Kreislaufs und danach zum Ausgleich der Verluste.

Nach dem erfindungsgemäßen Verfahren gelangt nur ein sehr geringer Teil der Schadstoffe ins Kondensat. Das Kreislaufgas weist außerdem nur einen sehr geringen Schadstoffgehalt auf.

Eine vorteilhafte Ausgestaltung der Erfindung ist, daß die aus der Stufe der Kondensation austretenden Gase durch Adsorption von den restlichen Schadstoffen befreit werden.

Eine vorteilhafte Ausgestaltung der Erfindung ist, daß als Oxidationsmittel sauerstoffangereicherte Luft, O₂, H₂O₂ und/oder Ozon eingesetzt werden.

Eine vorteilhafte Ausgestaltung der Erfindung ist, daß die austretenden wasserdampfhaltigen Behandlungsgase nach der Entstaubung katalytisch oxidiert werden und daß ein Teilstrom der die Kondensationsstufe c) verlassender Gase in die Stufe der katalytischen Oxidation zurückgeführt wird.

Nach der Entstaubung werden die wasserdampfhaltigen Behandlungsgase einer katalytischen Oxidation unterzogen. Die katalytische Oxidation bewirkt, daß die bei der Oxidation im Ofen nicht oxidierten Schadstoffe in der nachfolgenden katalytischen Oxidation oxidiert werden. Das geschieht vorzugsweise dadurch, daß die wasserdampfhaltigen Behandlungsgase durch einen Festbett- oder Wabenkatalysator geleitet werden, wobei mit Sauerstoff angereicherte Luft, Sauerstoff, Ozon oder H₂O₂ zugesetzt werden, bis ein Sauerstoffpartialdruck von 10% vorherrscht. Der Verlauf der katalytischen Oxidation wird durch kontinuierliche gaschromatografische Messung überwacht. Nach erfolgter katalytischer Oxidation wird der größte Teil der wasserdampfhaltigen Behandlungsgase, der eine Temperatur von >400°C aufweist, in den Ofen zurückgeführt und der restliche Teil der Kondensation zugeführt.

Die nicht kondensierten Gase werden in einem weiteren Kreislauf in die Stufe der katalytischen Oxidation zurückgeführt. Die in die Stufe der katalytischen Oxidation zurückgeführten Gasmengen betragen etwa 90 % der nicht kondensierten Gase und bestehen hauptsächlich aus Sauerstoff. Die restlichen, nicht in die katalytische Oxidationsstufe zurückgeführten, Gasanteile können in einem Aktivkohlefilter von noch vorhandenen Schadstoffen befreit und anschließend über einen Kamin abgegeben werden.

Eine vorteilhafte Ausgestaltung der Erfindung ist, daß für die katalytische Oxidation Oxide und/oder Sulfate eines oder mehrerer Übergangsmetalle, ausgewählt aus Vanadium, Chrom, Mangan, Eisen, Kobalt, Nickel, Zink, Molybdän oder Wolfram als katalytisch aktive Substanzen verwendet werden. Die katalytisch aktiven Substanzen werden auf feste Träger, bestehend aus Alumosilikaten oder TiO₂, aufgebracht, um Festbett- oder Wabenkatalysatoren zu erhalten.

Eine vorteilhafte Ausgestaltung der Erfindung ist, daß die austretenden wasserdampfhaltigen Behandlungsgase nach der Entstaubung mit UV-Licht bestrahtl werden.

Die Behandlung mit UV-Licht erfolgt in einem Reaktor, auf dessen Innenwänden mehrere UV-Lichtquellen angeordnet sind. Dabei wird mit einer Wellenlänge von <300 nm bestrahlt. Die Behandlung mit UV-Licht wird der direkten Oxidation im Ofen mit besonders gutem Erfolg dann nachgeschaltet, wenn Materialien, die mit polychlorierten Alkanen kontaminiert sind, behandelt werden.

Erfindungsgemäß können die Stufen der katalytischen Oxidation und anschließenden UV-Bestrahlung oder die Stufen der UV-Bestrahlung und anschließenden katalytischen Oxidation der Oxidation im Ofen nachgeschaltet werden.

Eine vorteilhafte Ausgestaltung der Erfindung ist, daß das Oxidationsmittel direkt in den Ofen gegeben wird. Es ist zwar möglich, die Oxidationmittel mit dem Schleppgas in den Ofen einzuführen, die Menge des so eingeführten Oxidationsmittels müßte dann aber wesentlich größer sein, da längere Mischstrecken die Wirksamkeit der Oxidationsmittel beinträchtigen. Es hat sich daher als vorteilhaft erwiesen, die Oxidationsmittel direkt in den Ofen zu geben. Die Oxidationsmittel werden bei einer klassischen Wirbelschicht unmittelbar über dem Festbett in die Gasphase eingebracht. Bei einem Drehrohrofen erfolgt eine axiale Eintragung der Oxidationsmittel unmittelbar über dem Materialbett. Bei der Verarbeitung im Drehrohrofen werden die Heißgase oder der Heißdampf zweckmäßigerweise mittels ringförmig auf dem Ofen verteilten Düsensteinen in das Beschickungsbett eingeblasen, wobei die Gaszufuhr durch die Düsensteine nur erfolgt, wenn diese sich unter dem Beschickungsbett befinden.

Eine vorteilhafte Ausgestaltung der Erfindung ist, daß das kontaminierte Material vor der Eintragung in den Ofen getrocknet wird.

Eine vorteilhafte Ausgestaltung der Erfindung ist, daß das kontaminierte Material vor der Eintragung in den Ofen zerkleinert und/oder klassiert wird.

Eine vorteilhafte Ausgestaltung der Erfindung ist, daß das kontaminierte Material vor der Eintragung in den Ofen geläutert und gravimetrisch getrennt wird. Durch eine vorgeschaltete Läuterung und gravimetrische Trennung der Grobfraktion >1 mm, z.B. auf einer Setzmaschine, können die Mengen, die in den Ofen gegeben werden, verringert werden.

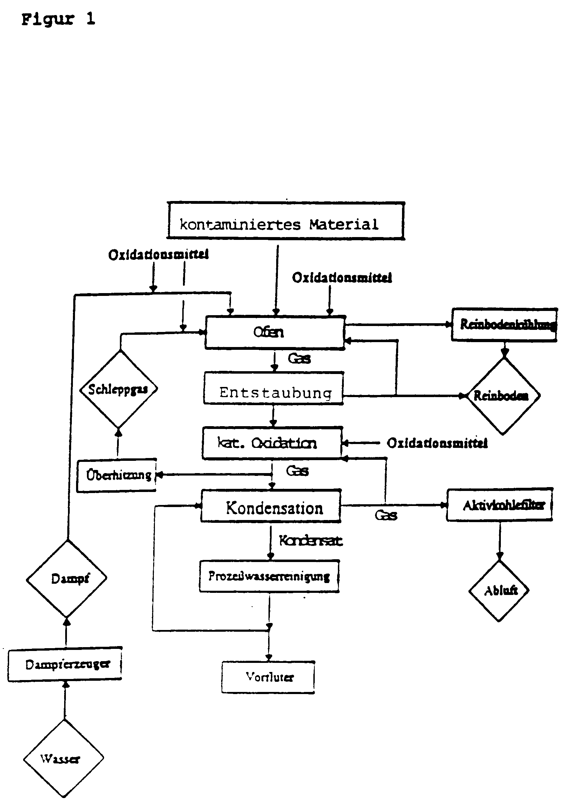

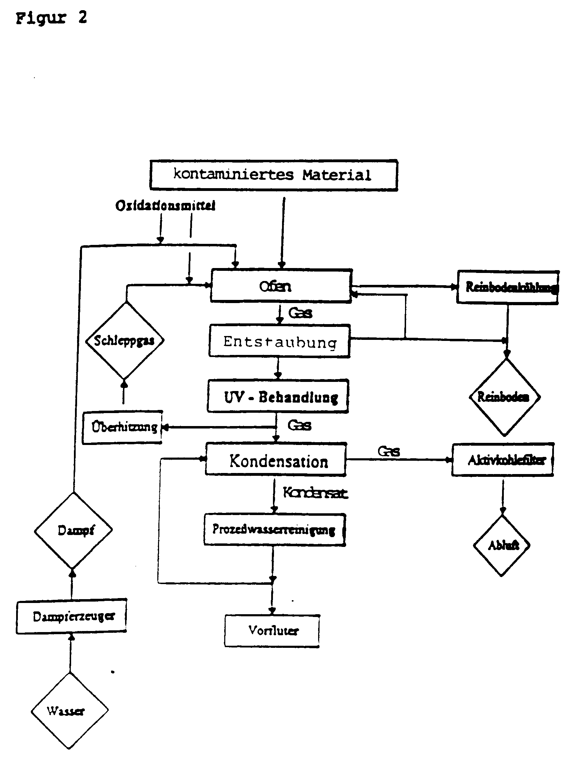

Die Erfindung wird nachfolgend anhand von Zeichnungen und eines Ausführungsbeispiels näher erläutert, wobei Fig. 1 und Fig. 2 jeweils ein Fließschema zeigen, das mit der Behandlung des konaminierten Materials in einem Drehrohrofen beginnt.

Gemäß Fig. 1 wird das kontaminierte Material einem Drehrohrofen unter Zusatz von Oxidationsmittel aufgegeben und dem Drehrohrofen von einem Dampferzeuger gebildeter Heißdampf zugeführt. Der aus dem Drehrohrofen ausgetragene Reinboden wird einer Kühlung und das aus dem Drehrohr austretende heißdampf- und schadstoffhaltige Gas einer Entstaubung unterworfen. Der aus dem Gas abgetrennte Staub wird ganz oder teilweise dem Reinboden zugegeben; bei teilweiser Zugabe des Staubs wird der andere Staubanteil in den Drehrohrofen zurückgeführt. Das entstaubte Gas wird dann einer katalytischen Oxidation unter Zusatz von Oxidationsmittel unterworfen, wobei ein Teil des katalytisch behandelnden Gases dem Überhitzerteil des Dampferzeugers und von diesem aus dem Drehrohrofen zugeführt wird. Der andere Teil des katalytisch behandelnden Gases wird einer Kondensation unterworfen und das entstandene Gas ganz oder teilweise über einen Aktivkohlefilter an die Luft abgegeben. Bei teilweiser Abführung des Gases an die Luft wird der andere Gasanteil zur katalytischen Oxidation zurückgeführt. Das gebildete Kondensat wird in einer Prozeßwasserreinigung von den Schadstoffen befreit und dann ganz oder teilweise in den Vorfluter abgegeben. Bei teilweiser Abgabe des gereinigten Kondensats in den Vorfluter wird der andere Kondensatanteil zur Kondensation zurückgeleitet. Das Oxidationsmittel wird direkt oder mittels des von dem Dampferzeuger gebildeten Heißdampfs oder mittels des zurückgeführten Gasstroms in den Drehrohrofen eingebracht.

Der in Fig. 2 dargestellte Verfahrensablauf unterscheidet sich von demjenigen gemäß Fig. 1 dadurch, daß das aus der Entstaubung austretende Gas einer Behandlung mittels UV-Licht, anstelle einer katalytischen Oxidation, unterzogen wird. Demzufolge kann auch die Zugabe von Oxidationsmittel an dieser Stelle entfallen.

Das kontaminierte Material wird auf eine für den jeweils verwendeten Ofen erforderliche Größe zerkleinert. Bei der Verarbeitung im Wirbelschichtofen oder Schwebebettreaktor muß immer eine Zerkleinerung des kontaminierten Materials erfolgen.

### Ausführungsbeispiel:

Kontaminiertes Material, das 20 Gew.-% H₂O und 7200 mg/kg polyzyklische aromatische Kohlenwasserstoffe (PAK) enthielt, wurde einer naßmechanischen Vorbehandlung unterzogen. Dazu wurde das kontaminierte Material einer Trommel mit Wasser im Verhältnis 1 : 1 aufgegeben und attritioniert.

Der Trommelaustrag wurde anschließend klassiert. Dabei wurden die Fraktionen
- I:: Korngröße >20 mm,
- II:: Korngröße 1 bis 20 mm und
- III:: Korngröße <1 mm
erhalten.

Die Fraktion I (>20 mm) wurde zerkleinert und erneut der Attritionstrommel aufgegeben. Die Fraktion II (1 bis 20 mm) durchlief eine gravimetrische Sortierung, um das Leichtgut, das im wesentlichen aus bodenfremden Bestandteilen (Holz, Kohle, Wurzelwerk) bestand und ca. 1 bis 5 Gew.-% der Bodenmasse betrug, abzutrennen. Das anfallende Schwergut wies Gehalte an PAK unterhalb des Sanierungszielwertes von 20 mg/kg auf. Da der PAK-Gehalt nicht darüber lag, brauchte das Material nicht nachzerkleinert und erneut attritioniert zu werden. Die Fraktion III (<1 mm) wurde entwässert, wobei sich ein H₂O-Gehalt von 30 Gew.-% einstellte. Der PAK-Gehalt betrug 1170 mg/kg. Dieses kontaminierte Material wurde vorgetrocknet, um den H₂O-Gehalt auf einen Wert von 15 bis 17 Gew.-% zu verringern. Anschließend wurden 100 kg/h des kontaminierten Materials einem Reaktor aufgegeben, der aus einer 4 m langen und 0,2 m breiten rechteckigen Kammer bestand, die eine lichte Höhe von 0,3 m hatte. In einer Höhe von 0,1 m oberhalb des Kammerbodens war ein Siebboden über den gesamten Querschnitt eingespannt. Das Material fiel über eine Aufgabevorrichtung auf den Siebboden und wurde von einem Kettenkratzförderer über den Siebboden bewegt. Die Zugabe des Heißdampfes erfolgte unterhalb des Siebbodens. Der Heißdampf wirkte als Fluidisierungsmedium. Es wurden etwa 1 kg Heißdampf pro 1 kg kontaminiertem Material in den Reaktor eingeleitet. Das Oxidationsmittel H₂O₂ wurde dem Heißdampf unmittelbar unter dem Rost des Reaktors zugemischt. Das Mengenverhältnis betrug 2,5 l H₂O₂ (100 %) auf 100 kg Heißdampf. Das Gemisch aus Heißdampf und H₂O₂ durchströmte die fluidisierte Materialschicht von unten nach oben. Die Heißdampftemperatur wurde so eingestellt, daß die Temperatur im Reaktor 400°C nicht überschritt. Der PAK-Gehalt wurde nach einer Behandlungsdauer von 15 Minuten im ausgetragenen Material und im Eluat nach DIN 381, Teil 4, Oktober 1984 ermittelt. Der PAK-Gehalt lag unterhalb des Sanierungszielwertes von 20 mg/kg im Bereich der Nachweisgrenze. Der Gesamtcyanidgehalt im behandelten Material und im Eluat lag unterhalb der Nachweisgrenze.

Etwa 500 Nm³/h des heißdampf- und schadstoffhaltigen Gases verließen den Reaktor mit einer Temperatur von 400°C und wurden im Kerzenfilter entstaubt. Der Staubgehalt wurde auf der Rohgasseite mit 2000 mg/Nm³ und auf der Reingasseite mit 1 mg/Nm³ gemessen. Der Staub wies PAK-Gehalte unterhalb des Sanierungszielwertes von 20 mg/kg auf. Das entstaubte Gas wurde anschließend einer katalytischen Oxidation unterzogen, um die restlichen organischen Schadstoffe oxidativ zu zerstören. Dabei wurde ein Gehalt von ca. 40 mg/Nm³ an organischen Stoffen im Gas am Eintritt in den Katalysator und ca. 10 mg/Nm³ am Austritt aus dem Katalysator gemessen. Ein Teil des katalytisch nachbehandelten Gases wurde in den Überhitzerteil des Dampferzeugers und danach in den Reaktor zurückgeführt. Der Rest des Gasstromes wurde über eine Kondensation geleitet und auf 40°C abgekühlt. Heißdampf und die im Gas vorhandenen Schadstoffe kondensierten. Das aus der Kondensation austretende Gas wurde über einen Behälter mit Aktivkohle zur adsorptiven Abtrennung noch in Spuren vorhandener Schadstoffe geleitet. Nach dem Austritt aus dem Aktivkohlefilter erfüllte das Gas die Bedingungen der "Technische Anleitung zur Reinhaltung der Luft -TA Luft- vom 27.02. und 04.04.1986". Das Kondensat wurde in einer Emulsionsspaltanlage von den kondensierten PAK und anderen organischen Schadstoffen befreit und danach in einem Aktivkohlebett auf Vorfluterqualität gereinigt.

## Patentansprüche

1. Verfahren zur thermischen Abtrennung von organischen und/oder anorganischen Stoffen sowie von Wasser aus kontaminierten Böden, Sanden, Schlämmen, Feststoffaggregaten und festen Rückständen, wobei
a) das kontaminierte Material nach einer Vorbehandlung in einem direkt oder indirekt beheizten Ofen, der als Drehrohrofen, Wirbelschichtofen oder Schwebebettreaktor ausgebildet ist, erhitzt wird und während des Erhitzens mit zurückgeführten Heißgasen oder Heißdampf und mit Oxidationsmitteln behandelt wird,
b) die austretenden wasserdampfhaltigen Behandlungsgase entstaubt werden und 80 bis 90 Vo.-% der wasserdampfhaltigen Behandlungsgase unter Ausschluß einer Kondensation als Schleppgas in den Ofen zurückgeführt werden,
c) der restliche Teil der wasserdampfhaltigen Behandlungsgase einer Kondensation unterworfen wird und die dabei gebildete flüssige Phase abgezogen und naßchemisch oder physikalisch von Schadstoffen befreit wird.

2. Verfahren nach Anspruch 1, dadurch gekennzeichnet, daß die aus der Stufe der Kondensation austretenden Gase durch Adsorption von den restlichen Schadstoffen befreit werden.

3. Verfahren nach Anspruch 1 oder 2, dadurch gekennzeichnet, daß als Oxidationsmittel mit Sauerstoff angereicherte Luft, 0₂, H₂0₂ und/oder Ozon eingesetzt werden.

4. Verfahren nach den Ansprüchen 1 bis 3, dadurch gekennzeichnet, daß die austretenden wasserdampfhaltigen Behandlungsgase nach der Entstaubung katalytisch oxidiert werden und daß ein Teilstrom der die Kondensationsstufe c) verlassenden Gase in die Stufe der katalytischen Oxidation zurückgeführt wird.

5. Verfahren nach Anspruch 4, dadurch gekennzeichnet, daß für die katalytische Oxidation Oxide und/oder Sulfate eines oder mehrerer Übergangsmetalle, ausgewählt aus Vanadium, Chrom, Mangan, Eisen, Kobalt, Nickel, Zink,Molybdän oder Wolfram als katalytisch aktive Substanzen verwendet werden.

6. Verfahren nach den Ansprüchen 1 bis 3, dadurch gekennzeichnet, daß die austretenden wasserdampfhaltigen Behandlungsgase nach der Entstaubung mit UV-Licht bestrahlt werden.

7. Verfahren nach den Ansprüchen 1 bis 6, dadurch gekennzeichnet, daß das Oxidationsmittel direkt in den Ofen gegeben wird.

8. Verfahren nach den Ansprüchen 1 bis 7, dadurch gekennzeichnet, daß das kontaminierte Material vor der Eintragung in den Ofen getrocknet wird.

9. Verfahren nach den Ansprüchen 1 bis 8, dadurch gekennzeichnet, daß das kontaminierte Material vor der Eintragung in den Ofen zerkleinert und/oder klassiert wird.

10. Verfahren nach den Ansprüchen 1 bis 9, dadurch gekennzeichnet, daß das kontaminierte Material vor der Eintragung in den Ofen geläutert und gravimetrisch getrennt wird.

## Claims

1. Process for thermal separation of organic and/or inorganic materials as well as water from contaminated grounds, sands, slurries, solid material aggregates and solid residues, wherein
a) the contaminated material is, after pre-treatment, heated in a directly or indirectly heated oven is designed as a rotary pipe oven, fluidized bed oven or floating bed reactor, and during heating treated with fed back hot gases or hot steam and with oxidants;
b) exiting water-vapour containing treatment gases are dusted and between 80 and 90 vol.-% of water-vapour containing treatment gases are, under exclusion of condensation, fed back into the oven as drag gas;
c) the remaining portion of the water-vapour containing treatment gases are subjected to condensation, and a thus formed liquid phase is extracted and wet-chemically or physically freed of pollutants.

2. Process according to Claim 1, **characterised in that** gases exiting from the condensation stage are freed from remaining pollutants by adsorption.

3. Process according to Claim 1 or 2, **characterised in that** oxygen enriched air, O₂, H₂O₂ and/or ozone is/are used as oxidant.

4. Process according to Claims 1 to 3, **characterised in that** the exiting water-vapour containing treatment gases are after dusting catalytically oxidised, and a partial flow of gases exiting condensation stage c) is fed back into the stage of catalytic oxidation.

5. Process according to Claim 4, **characterised in that** oxides and/or sulfates of one or more transition metal selected from vanadium, chromium, manganese, iron, cobalt, nickel, zinc, molybdenum or tungsten as catalytic active substances are used for catalytic oxidation.

6. Process according to Claims 1 to 3, **characterised in that** exiting water-vapour containing treatment gases are radiated by UV light after dusting.

7. Process according to Claims 1 to 6, **characterised in that** the oxidant is fed directly into the oven.

8. Process according to Claims 1 to 7, **characterised in that** the contaminated material is dried prior to delivery into the oven.

9. Process according to Claims 1 to 8, **characterised in that** the contaminated material is reduced and/or classified prior to delivery into the oven.

10. Process according to Claims 1 to 9, **characterised in that** the contaminated material is refined and gravimetrically separated prior to delivery into the oven.

## Revendications

1. Procédé pour la séparation thermique de matières organiques et/ou inorganiques ainsi que d'eau de sols, de sables, de boues, d'agrégats de matières solides et de résidus solides contaminés,
a) la matière contaminée étant chauffée après un traitement préalable dans un four directement ou indirectement chauffé qui est constitué comme un four rotatif, un four à lit fluidisé ou un réacteur à lit flottant, et étant traitée pendant le chauffage avec des gaz chauds recyclés ou de la vapeur surchauffée et avec un agent d'oxydation,
b) les gaz de traitement contenant de la vapeur d'eau sortants étant dépoussièrés et de 80 à 90% en volume des gaz de traitement contenant de la vapeur d'eau étant renvoyés comme gaz porteur dans le four avec exclusion d'une condensation
c) la partie restante des gaz de traitement contenant de la vapeur d'eau étant soumise à une condensation et la phase liquide ce faisant formée étant soutirée et libérée des matières nocives chimiquement par voie humide ou physiquement.

2. Procédé selon la revendication 1 ou 2, caractérisé en ce que les gaz sortants de l'étape de la condensation sont libérés des matières nocives restantes par adsorption.

3. Procédé selon la revendication 1 ou 2, caractérisé en que l'on utilise comme agent d'oxydation de l'air enrichi en oxygène, O₂,H₂O₂ et/ou de l'ozone.

4. Procédé selon les revendications 1 à 3, caractérisé en ce que les gaz de traitement contenant de la vapeur d'eau sortants sont catalytiquement oxydés après le dépoussiérge et en ce qu'un courant partiel des gaz sortants de l'étape de condensation (c) est renvoyé dans l'étape de l'oxydation catalytique.

5. Procédé selon le revendication 4, caractérisé en ce que l'on utilise pour l'oxydation catalytique comme substances catalytiquement actives des oxydes et/ou des sulfates d'un ou plusieurs métaux de transition choisis parmi le vanadium, le chrome, le manganèse, le fer, le cobalt, le nickel, le zinc, le molybdène ou le tungstène.

6. Procédé selon les revendications 1 à 3, caractérisé en ce que les gaz de traitement contenant de la vapeur d'eau sortants sont irradiés après le dépoussiérage avec de la lumière UV.

7. Procédé selon les revendications 1 à 6, caractérisé en ce que l'agent d'oxydation est directement introduit dans le four.

8. Procédé selon les revendications 1 à 7, caractérisé en ce que le matière contaminée est séchée avant l'introduction dans le four.

9. Procédé selon les revendications 1 à 8, caractérisé en ce que la matière contaminée est broyée et/ou triée avant l'introduction dans le four.

10. Procédé selon les revendications 1 à 9, caractérisé en ce que la matière contaminée est purifiée et séparée par gravimétrie avant l'introduction dans le four.
